# EUROPEAN PATENT APPLICATION

(11) **EP 3 331 146 A1**
(43) Date of publication of application: **06.06.2018**
(21) Application number: 16201530.9
(22) Date of filing: 30.11.2016
(51) Int. Cl.: H02M 3/02, H04M 19/00

(54) **DEVICE AND METHOD FOR SUPPLYING POWER TO INFORMATION AND COMMUNICATIONS TECHNOLOGY EQUIPMENT**

(71) Applicant: Nokia Technologies Oy, 02610 Espoo (FI)
(72) Inventor: Neustadt, Alf, 70435 Stuttgart (DE)
(74) Representative: DREISS Patentanwälte PartG mbB

(57) **Abstract**

A device (100) adapted for supplying power to a power supply unit (101) of a telecommunication equipment (10), the device comprising:
- a first input (1) for receiving a direct current having a first voltage level (V1);
- a direct current converter circuit (104) for converting the direct current having the first voltage level (V1) to direct current having a second voltage level (V2); and
- a first output for supplying the direct current having the second voltage level (V2) to the power supply unit (101) of the telecommunication equipment (10);
wherein the direct current to direct current converter circuit (104) is a non-isolated type direct current to direct current converter circuit.

A telecommunication equipment (10) comprising the device (100) according to any of the preceding claims and a power supply unit (101), wherein the power supply unit (101) comprises a second input (3) for connection to the first output (2) of the device (100).

A method of supplying power to a power supply unit (101) of a telecommunication equipment (10) the method comprising: supplying a direct current converter circuit (104) with direct current having a first voltage level (V1), converting, by the current converter circuit (104), the direct current having the first voltage level (V1) to direct current having a second voltage level (V2), supplying the direct current having the second voltage level (V2) to the power supply unit (101) of the equipment (10), wherein the direct current converter circuit (104) is a non-isolated type direct current to direct current converter circuit.

## Description

### Field of the invention

The invention concerns a device for supplying power to information and communications technology equipment, information and communications technology equipment including such device, and a method of supplying power to information and communications technology equipment.

### Background

Telecommunication equipment for a telecommunication network intended for stand-alone deployment is typically designed for a supply with the alternating current of the main power supply of the urban location. For example, metro cell base stations or small cell base stations are designed to operate on a main power supply, e.g. of 110 Volts or 230 Volts alternating current with a frequency of 60 Hertz or 50 Hertz.

In case the telecommunication equipment deployment is not stand-alone, but together with other telecommunication equipment on a site, usually a central power supply unit is installed on the site which converts the alternating current of the main power supply to direct current, DC, of -48 Volts. The site is for example supplied by remote direct current feed with high DC voltage, e.g. 300 Volts. The high DC voltage is converted to -48V at the central power supply on the site. A positive output terminal of the central power supply is supplied at 0 Volts. A negative output terminal of the central power supply is supplied at -48 Volts. The site may be for example a distribution box including the telecommunication equipment and the central power supply unit. To reduce space required by the site, typically only one power supply unit is installed on the site to provide the direct current for all telecommunication equipment installed on the site. Often there is also a backup battery on the site having -48 Volts direct current power supply.

The operation of telecommunication equipment causes significant heat on the site. Therefore, the site may be actively or passively cooled. The power consumption is therefore a major concern in particular from the temperature and acoustic noise point of view. This means that additional equipment on the site should not add more power and noise dissipation than needed. In particular sites on which telecommunication equipment operates are designed to have up to 65 or 70°C internal air temperature. On sites that were usually designed to host wireline equipment, there is by design some extension space for increasing number of subscribers. Installing additional telecommunication equipment, such as metro cell base stations or small cell base stations, must not restrict the primary purpose of the site, the wireline access. Therefore, the space consumption of the metro cell or small cell must be minimized.

Up to now, the solution for such sites was either to install an alternating current supply on the site for use with telecommunication equipment designed for e.g. 110 Volts or 230 Volts alternating current, to use a direct current variant of the telecommunication equipment for connecting to the central power supply unit delivering direct current, if it exists, or to use an off-the-shelf inverter converting direct current of -48 Volts delivered by the central power supply unit to the alternating current, e.g. of 110 Volts or 230 Volts used by the respective telecommunication equipment.

Connecting additional telecommunication equipment to the main power supply of e.g. 110 Volts or 230 Volts alternating current requires a shutdown of the site. This causes a service interruption to many users of the telecommunication network. Furthermore, in this case additional alternating current cabling at the Voltage of the main power supply, e.g. of 110 Volts or 230 Volts alternating current, is required. This is a safety concern for future operation on the site. Furthermore, maintenance cost is high because it requires presence of a qualified electrician.

On the other side, access to the direct current delivered by the central power supply on the site at -48 Volts is simpler. To access the power, the central power supply unit may have several, individually switchable outputs. The switchable outputs may be connectable at a front side of the central power supply unit. This provides easy access. However, telecommunication equipment, for example metro cell base stations or small cell base stations, designed for the main power supply, e.g. of 110 Volts or 230 Volts alternating current, cannot be used in such environment.

Existing of-the-shelf direct current converters for converting -48 Volts direct current to alternating current are intended for mass market with a standardized outlet socket and are to be used in moderately warm environments.

They suffer from several shortcomings:
- they are usually quite bulky (several liters)
- the upper temperature limit is 50 or 55°C
- the efficiency is ∼85%
- they have no special precaution about inrush currents.

Especially size and temperature make it impossible to use these converters on aforementioned sites. Using alternating current directly on aforementioned sites is not useable for wide deployments for the reasons mentioned above.

A use of telecommunication equipment designed for alternating current of e.g. 110 Volts or 230 Volts on aforementioned site is hence impractical.

### Summary

It is therefore an objective of the present invention to provide a device to supply an equipment for storing, retrieving, manipulating, transmitting or receiving information electronically, that has been designed for alternating current of e.g. 110 Volts or 230 Volts, with power from a direct current power supply of e.g. -48 Volts with minimum cost, size and best efficiency.

This goal is achieved by a device according to claim 1, and a method according to claim 12. The invention also concerns an equipment for storing, retrieving, manipulating, transmitting or receiving information electronically according to claim 7 comprising the device. Such equipment is generally referred to as information and communications technology, ICT, equipment as well.

The device is adapted for supplying power to a power supply unit of a telecommunication equipment. The device comprises a first input for receiving a direct current having a first voltage level. The device comprises a direct current converter circuit for converting the direct current having the first voltage level to direct current having a second voltage level. The device comprises a first output for supplying the direct current having the second voltage level to the power supply unit of the telecommunication equipment. The direct current to direct current converter circuit is a non-isolated type direct current to direct current converter circuit. Using a non-isolated direct current to direct current converter has a better efficiency than using an isolated converter. Using a non-isolated converter has also the advantage that the voltage from any terminal to ground stays at a low level.

Preferably the direct current to direct current converter circuit is adapted to supply a constant direct current having the second voltage level in a range of 95 Volts to 125 Volts, preferably of 110 Volts or 120 Volts, or in a range of 215 Volts to 240 Volts, preferably of 230 Volts or 240 Volts. These voltage levels are common as root mean square voltages of mains power supply for telecommunication equipment designed for alternating current power supply. Therefore, interoperability is easily possible without modification to the telecommunication equipment itself. Other equipment for storing, retrieving, manipulating, transmitting or receiving information electronically also commonly use direct current at voltage levels of 110 Volts or 230 Volts.

The direct current to direct current converter circuit preferably comprises a step-up converter circuit for output of the direct current output and a protective circuit adapted to detect interruption in the current draw by the step-up converter circuit and/or increase in power consumption by the step-up converter circuit, and wherein the protective circuit is adapted to influence the direct current input to the step-up converter circuit, wherein the direct current input to the step-up converter circuit is reduced temporarily to a reduced direct current input upon detection of an interruption in current draw by the step-up converter circuit or upon detection of an increase in power consumption by the step-up converter circuit. This way the power supplied to the equipment is interruptible briefly if an arch is detected upon connecting the device to the equipment. Hence, the risk of potential damage to either device or equipment is mitigated.

Preferably the preceding claims, wherein the first input comprises a first input terminal and a second input terminal, wherein the first input terminal is adapted to receive a positive voltage level of preferably Zero Volts as a first component of the first voltage level, and wherein the second input terminal is adapted to receive a negative voltage level of preferably -48 Volts as a second component of the first voltage level, wherein the first voltage level of the direct current corresponds to the difference between the positive voltage level and the negative voltage level. This voltage levels are commonly available on sites where telecommunication equipment is installed. Therefore, interoperability is easily possible without modification of the site.

Preferably the first output comprises a first output terminal and a second output terminal, and wherein the first output terminal is adapted to supply a positive voltage level between +135 Volts and +105 Volts, or between +65 Volts and +50 Volts, in particular +62 Volts or +57 Volts, as a first component of the second voltage level and wherein the second output terminal is adapted to supply a negative voltage level between -95 Volts and -125 Volts, or between -45 Volts and -60 Volts, in particular -48 Volts or -53 Volts, as a second component of the second voltage level, wherein the second voltage level of the direct current corresponds to the difference between the positive voltage level and the negative voltage level. The voltage from any terminal to ground stays at a low level. For low levels of voltage, less restrictive standards and regulations apply for installation or maintenance. This simplifies the handling of the device.

Preferably the direct current to direct current converter circuit comprises an inrush current limiter adapted to limit the input direct current to the step-up converter circuit. This protects the circuitry in an effective and inexpensive way.

Embodiments of the invention further relate to a telecommunication equipment comprising the device and a power supply unit, wherein the power supply unit comprises a second input for connection to the first output of the device. Such equipment provides an integrated solution, e.g. in a single housing or mounted on a rack or mounting plate, for allowing the use of different power supply, without requiring a redesign of the entire equipment. Also handling and cooling of the device may be improved because active or passive cooling elements of the equipment cool the device.

Preferably, the device is detachably connectable to the power supply unit of the telecommunication equipment. The equipment may be modular, with a component containing the device and a component containing further elements of the equipment for storing, retrieving, manipulating, transmitting or receiving information electronically. This may facilitate the handling on site.

Preferably, the second input of the power supply unit is an input for alternating current.

Preferably the the power supply unit comprises a power supply circuit for converting input voltage with alternating current to output voltage with direct current, wherein the power supply circuit is connected to the second input, wherein the power supply circuit is adapted to convert the direct current having the second voltage level to direct current having a third voltage level, and wherein the power supply circuit is adapted to supply the direct current having the third voltage level to a second output. The direct current converter circuit accepts an input of direct current from a central power supply of a site for installing equipment. The power supply circuit is designed for accepting at its input alternating current for supplying the equipment. By the combination of the direct current converter circuit and the power supply circuit designed for alternating current input the voltage delivered at the output of the power supply circuit is essentially the same as if the power supply circuit was connected to the mains power supply. This provides an inexpensive robust solution for using equipment designed for alternating current power supply on a site providing direct current power supply.

Preferably the the power supply unit comprises a step-up converter circuit adapted to output a voltage following the second voltage level at the first output of the device. This is a flexible design for tolerating variations in the input voltage.

Preferably the device is installable in or at an air flow path for cooling the equipment. The same air used for cooling the equipment may be used this way. This is an effective way to cool the additional power converter.

The method of supplying power to a power supply unit of a telecommunication equipment comprises supplying a direct current converter circuit with direct current having a first voltage level, converting, by the current converter circuit, the direct current having the first voltage level to direct current having a second voltage level, supplying the direct current having the second voltage level to the power supply unit of the equipment, wherein the direct current converter circuit is a non-isolated type direct current to direct current converter circuit.

Preferably the second voltage level is a constant voltage level in a range of 95 Volts to 125 Volts, in particular of 95 Volts or 120 Volts, or in a range of 215 Volts to 240 Volts, in particular 230 Volts or 240 Volts.
Preferably the direct current having the second voltage level is supplied via a first output terminal and a second output terminal, wherein the first output terminal supplies a positive voltage level between +135 Volts and +105 Volts, or between +65 Volts and +50 Volts, in particular +62 Volts or +57 Volts, as a first component of the second voltage level and wherein the second output terminal supplies a negative voltage level between -95 Volts and -125 Volts, or between -45 Volts and -60 Volts, in particular -48 Volts or -53 Volts, as a second component of the second voltage level, wherein the second voltage level of the direct current corresponds to the difference between the positive voltage level and the negative voltage level.

Preferably the method comprises cooling of at least parts of the direct current converter circuit by heat transfer in an air flow path for cooling the equipment. This provides a very efficient cooling without active elements at the device.

Preferably the method comprises converting, by the power supply circuit, the direct current having the second voltage level to direct current having a third voltage level, and supplying the direct current having the third voltage level to equipment. The combination allows converting input direct current available at the site to direct current of different voltage level that is suitable as input for a power supply circuit of an equipment that was designed for alternating current power supply. Converting the latter to direct current by using the power supply that was designed for alternating current power supply is a very robust and efficient use of the available hardware.

Further developments of the invention can be gathered from the dependent claims and the following description.

### Brief description of the figures

Fig. 1 schematically shows in block diagram form components of a telecommunication equipment with integrated power supply device,
Fig. 2 schematically shows in block diagram form components of a telecommunication equipment with a power supply device as separate entity,
Fig. 3 schematically depicts parts of an equipment for storing, retrieving, manipulating, transmitting or receiving information electronically, and parts of a device to supply power to the equipment.

### Description of the embodiments

In the following description, the term mains electricity is used to describe general-purpose alternating-current electric power supply. Mains electricity in this context means the form of electrical power that is delivered to homes and businesses, and it is the form of electrical power that consumers use when they plug kitchen appliances, televisions and electric lamps into wall sockets. Two principal properties of the mains electricity, i.e. the electric power supply, differ between regions in the world: voltage and frequency. A voltage of nominally 230 Volts and a frequency of 50 Hertz are used in Europe, most of Africa, most of Asia, most of South America and Australia. In North America, the most common combination is nominally 120 Volts and a frequency of 60 Hertz. Other voltages exist, and some countries may have, for example, 230 Volts but 60 Hertz.

In the following description, reference is made to telecommunication equipment. Telecommunication equipment is equipment capable of storing, retrieving, manipulating, transmitting or receiving information electronically. An example of telecommunication equipment is a radio access point. Radio access points may be small cells or metro cells. Preferably the design of any electrical circuitry of the telecommunication equipment is configured to accept power only up to 150 Watts or 100 Watts.

Any reference to equipment, e.g. small cells or metro cells, designed for use with mains electricity in this context means that such equipment accepts power input according to the nominal voltage and frequency of the respective of at least one of aforementioned regions. In particular, for use with mains electricity means that alternating current can be used to power any such equipment for operation. Such equipment contains on input side at least one power converter, designed to accept as input such alternating current.

Aforementioned small cells or metro cells are compact and discrete mobile phone base stations. Small cells are low-powered radio access nodes that operate in licensed and unlicensed spectrum that have a range of 10 meters to 1 or 2 kilometers. Small cells are small compared to a mobile macrocell, which may have a range of a few tens of kilometers. Small cells are for example referred to as femtocells, picocells, and microcells. Small cells are available for a wide range of air interfaces including air interfaces implemented according to any version of any of the standards presently known and referred to as GSM, CDMA2000, TD-SCDMA, W-CDMA, 3G, 4G, LTE or WiMax. The Metro cells typically operate in a licensed spectrum. Metro cells use low radio frequency power over short range up to several hundred meters, e.g. up to 200 meters or 100 meters. The capacity for voice calls of a metro cell may be limited to a predetermined number of concurrent voice calls, e.g. 16 or 32 concurrent voice calls. The capacity of a metro cell for streaming of data may be limited to predetermined data rates, e.g. of the highest 3G and 4G speeds.

In this case a cluster of metro cells can deliver very high levels of data throughput, making them very cost effective to handle urban areas with strong demand.

Metro cells thus provide excellent mobile phone service, delivering very high data speeds and capacity, solving the problem of growing data traffic demand cost effectively.

Metro cells are smaller than other base stations, such as macro cells having higher radio frequency power and/or a range larger than e.g. 200 or 500 meters. Therefore, Metro cells can be located unobtrusively in urban areas. Metro cells can be mounted on lampposts, positioned on the sides of buildings or found indoors in stadiums, transport hubs and other public areas. For power supply, metro cells use the main power supply available in the location they are installed. This means that metro cells are designed for e.g. 110 Volts alternating current or 230 Volts alternating current power supplies. All of the above results in a comparatively lower cost per unit of a metro cell or a cluster of metro cells delivering the same extra capacity as a macro cell.

However, the metro cells are by design limited to the use with a main power supply having an alternating current of e.g. 110 Volts or 230 Volts. Other telecommunication equipment may also be designed for such power supply. This limits the use of the metro cells or the other telecommunication equipment to locations having aforementioned main alternating current supply.

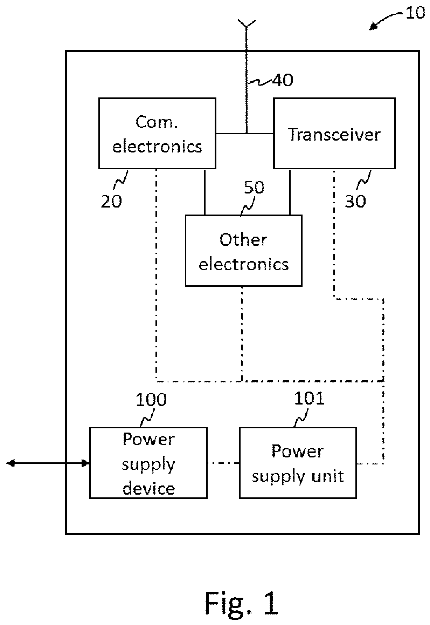

Fig. 1 schematically shows in block diagram form components of a telecommunication equipment 10, such as a small cell or a metro cell. The telecommunication equipment comprises electronics for communication 20, a transceiver 30, an antenna 40 and further power consuming electronics 50. The electronics for communication 20 for example includes a radio frequency (RF) power amplifier for driving the antenna 40 for transmission of information over a radio interface. The transceiver 30 preferably comprises a transmitter for transmitting information via the antenna 40 and a receiver for receiving information via the antenna 40. The further power consuming electronics 50 for example comprises one or more processors and one or more memory entities to enable different processes such as radio control, resource scheduling, etc.

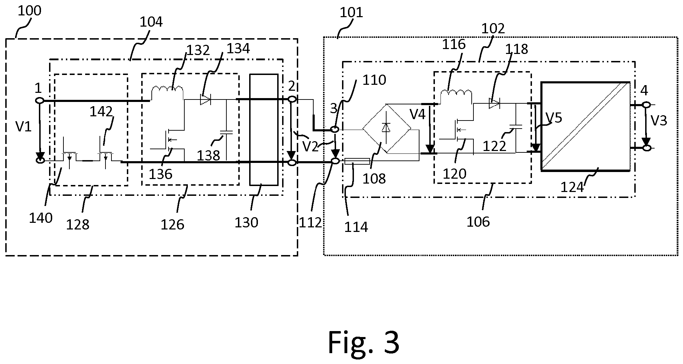

The equipment 10 further includes a power supply unit 101 for supplying power (denoted with dash-dotted line in Fig. 1) to the different entities within the equipment 10, e.g. the transceiver 30 and/or an RF power amplifier within the communication electronics 20. In embodiments of the invention, the equipment 10 further includes a device 100 for supplying power to the power supply unit 101. Further details of the power supply device 100, as a separate entity as well as in combination with the power supply unit 101, will be discussed with reference to Fig. 3.

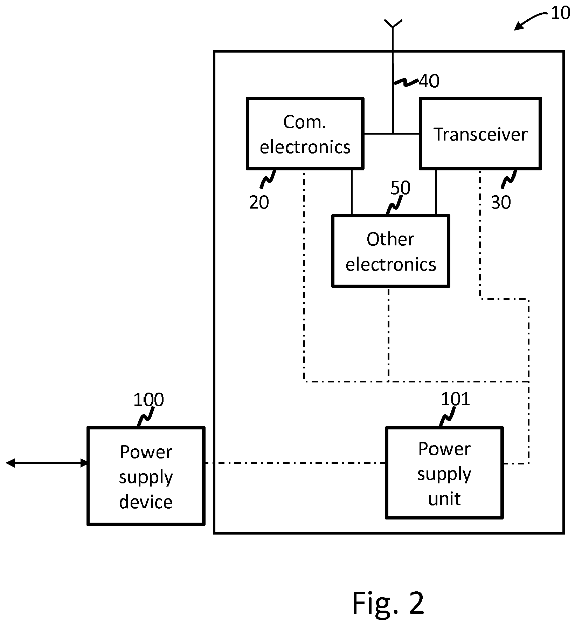

Fig. 2 schematically shows in block diagram form components of the telecommunication equipment 10 with the power supply device 100 as separate entity. Telecommunication equipment 10 is for example an off the shelf telecommunication equipment for use with mains electricity.

The telecommunication equipment 10 is designed for use with mains electricity, i.e. a public supply system. Therefore, telecommunication equipment 10 needs to satisfy certain mandatory requirements.

Amongst other standards applying to devices designed for use with mains electricity, for example international standard IEC 61000-3-2:2014 and any earlier or later version deal with the limitation of harmonic currents injected into the public supply system. In particular, this standard specifies limits of harmonic components of the input current which may be produced by equipment tested under specified conditions. It is applicable to electrical and electronic equipment having an input current up to and including 16 Ampere per phase, and intended to be connected to public low voltage distribution systems. Telecommunication equipment 10 is designed for use with mains electricity. Therefore, this standard is applicable to telecommunication equipment 10. Therefore, if required by a standard, a component of the telecommunication equipment 10 described below are designed accordingly.

Fig. 3 depicts the device 100 for supplying power to the power supply unit 101 of the telecommunication equipment 10 (see Fig. 2). The device 100 comprises a first input 1 for receiving a direct current having a first voltage level V1, a direct current converter circuit 104 for converting the direct current having the first voltage level V1 to a direct current having a second voltage level V2, and a first output 2 for supplying the direct current having the second voltage level V2 to the power supply unit 101.The direct current to direct current converter circuit 104 is a non-isolated type direct current to direct current converter circuit. While an isolated direct current converter circuit typically uses a transformer to electrically isolate the output from the input of the power stage the direct current to direct current converter circuit 104 does not form any electrical isolation between the input 1 and output 2 of the device 100.

The power supply unit 101 comprises a power supply circuit 102, a second input 3, and a second output 4. The power supply circuit 102 is adapted to receive from the second input 3 the direct current having the second voltage level V2. The power supply circuit 102 is further adapted to convert the direct current having the second voltage level V2 to direct current having a third voltage level V3, and to output the direct current having the third voltage level V3 to the second output 4.

The power supply circuit 102 is preferably a wide range power supply unit with nominal input of the second voltage level V2, e.g. 110 Volts / 230 Volts actually supporting e.g. 85 Volts alternating current to 264 Volts alternating current at an input side. The input side in the example is the second input 3. At an output side of the power supply circuit 102 delivers direct current at the third voltage level V3, preferably 12 Volts direct current. The output side in the example is the second output 4. The second output 4 has two terminals.

The power supply circuit 102 comprises a first step-up converter circuit 106. The first step-up converter circuit 106 has two inputs that connect to respective two outputs of an input rectifier 108. The input rectifier 108 may comprise diodes. Preferably a bridge rectifier providing full-wave rectification from a two-wire alternating current input is used. A first electromagnetic interference filter may be provided between the respective outputs of the input rectifier 108 and the respective inputs of the first step-up converter circuit 106. As described above, the second input 3 has two terminals, a first input terminal 110 and a second input terminal 112. The two inputs of the input rectifier 108 connect to a respective of the first input terminal 110 and the second input terminal 112 of the power supply circuit 102. In the example, the second input terminal 110 connects to one side of a fuse 114 instead of the respective input of the input rectifier 108 directly. The other side of fuse 114 connects in this example to the input of the input rectifier 108. Both input of the input rectifier 108 may connect to the respective input of the power supply circuit 102 via respective fuses as well. The fuse 114 is in the example rated for direct current and alternating current.

The first step-up converter circuit 106 comprises a first storage element 116, e.g. a capacitor or inductor or the two in combination. In the example the first storage element 116 is an inductor. An input of the first storage element 116 connects to one of the two outputs of the input rectifier 108, i.e. to an input of the first step-up converter 106. The output of the first storage element 116 connects to an input of a first diode 118. The first diode 118 in the example is forward biased in the sense that the first diode 118 permits current flow from the input to the output if positive Voltage is supplied to the input of the first diode 118. The output of the first diode 118 connects to an output of the first step-up converter circuit 106. A first switch 120 is connected to the input of the first diode 118 and to another of the two outputs of the input rectifier 108. The first switch 120 may be a depletion mode type metal-oxide-semiconductor field-effect transistor, an insulated-gate bipolar transistor, or a bipolar junction transistor. A first capacitor 122 is in the example connected on one side of the first capacitor 122 to the output of the first diode 118. The other side of the first capacitor 122 connects to the same output of the input rectifier 108 as the first switch 120. The first capacitor 122, the other output of the input rectifier 108 and hence the corresponding side of first switch 120 are connected to another output of the first step-up converter circuit 106.

The first step-up converter circuit 106 is adapted to switch the first switch 120 frequently in operation, to follow the input voltage very closely and to control the input current to be proportional to the input voltage. The power supply circuit 102 comprises control circuitry for monitoring the input voltage and to switch the first switch 120 accordingly.

The output of the first step-up converter circuit 106 is a constant DC voltage which is, in the example, above the highest peak input voltage supplied to the first step-up converter circuit 106. In the example, the first step-up converter circuit 106 is adapted to accept a constant DC voltage at a fourth voltage level V4, and to provide a constant DC voltage at a fifth voltage level V5, e.g. of +380 Volts. The fourth voltage level V4 results in the example from +62 Volts at the input of the first step-up converter circuit 106 connecting to the diode 118, and -48 Volts at the other input of the first step-up converter circuit 106.

The two outputs of the first step-up converter circuit 106, connect to respective inputs of an isolated downconverter 124. Isolated in this context refers to the fact that the converter is electrically separated between the input and the output terminals.

The downconverter 124 is a direct current to direct current downconverter which generates the intended output voltage at the third voltage level V3. In the example the third voltage level V3 is 12 Volts. The downconverter 124 may generate other output voltages as well. The downconverter 124 may be switchable to generate different output voltages depending on the position of the switch.

In the example, alternating current input to the power supply circuit 102 is converted to direct current immediately after the input. This means that the input rectifier 108 is directly connected to the inputs 110, 112 of the power supply circuit 102. All remaining parts of the power supply circuit 102 operate with direct current.

In the following is described a method of operating the combination of device 100 and power supply unit 101 for output of direct current at the output of the downconverter 124. In particular, the method is described for the example of 12 Volts direct current output. The method applies equally to a downconverter 124 that is adapted to generate different output voltages depending.

In general the method comprises, supplying the direct current converter circuit 104 with direct current having a first voltage level V1, converting, by the current converter circuit 104, the direct current having the first voltage level V1 to direct current having a second voltage level V2, supplying the direct current having the second voltage level V2 to the power supply circuit 102, converting, by the power supply circuit 102, the direct current having the second voltage level V2 to direct current having the third voltage level V3. Preferably the first voltage level V1 is -48 Volts, the second voltage level V2 is 110 Volts and the third voltage level V3 is 12 Volts. The input to the direct current converter circuit 104 is preferably supplied at the first voltage level V1 by input of 0 Volts and -48 Volts on respective two terminals of the first input 1. The output of the direct current converter circuit 104 is preferably supplied at the second voltage level V2 by output of 62 Volts and -48 Volts on respective two terminals of the first output 2. This output is preferably the input to the second input 3 of the power supply unit 101, which may be an input for alternating current.

The first output 2 and the second input 3 are for example permanently or detachably joined via an electrical interface. The electrical interface in the example comprises electrical connectors for connecting the respective terminals of the first output 2 with respective terminals of the second input 3. Preferably, the electrical connectors are connected to each other by respective wires.

The device 100 is therefore detachably connectable to the power supply unit 101 of the telecommunication equipment 10. The telecommunication equipment 10 may contain the device 100. This means that the device 100 and the telecommunication equipment 10 may be installed in the same housing. Still, the device 100 may be detachable. In an alternative, the device 100 and at least parts of the power supply unit 101 may be integrated in the device 100 or the telecommunication equipment 10, e.g. on one printed circuit board or more printed circuit boards. Preferably the power supply circuit 102 and the direct current converter circuit 104 are installed in separate housings and detachably connectable.

In the example the output of the direct current converter circuit 104 is approximately 110 Volts to 115 Volts direct current. Other Voltages may be used at the interface between the direct current converter circuit 104 and the power supply circuit 102 as well.

It is to be noted that Voltages below 120 Volts direct current are categorized by IEC 60950 as Telecommunication network voltage TNV-2, or TNV-3, not as "hazardous voltage". The requirements for TNV circuits are as specified in EN 60950. TNV circuits are further sub-divided into TNV-1 circuits, TNV-2 circuits and TNV-3 circuits, depending on their nominal operating voltage and on the likelihood of their being subject to overvoltage. Therefore, the operation according to this method simplifies the approval of design, reduces any required safety measures regarding equipment handling and installation.

In the example the output voltage, i.e. the second voltage level V2, is elected to be as high as possible within the TNV-2 limits. This minimizes the temperature rise of the diodes used in the input rectifier 108.

In the example, the input rectifier circuit 108 is a full-wave rectifier including four diodes. If this full-wave rectifier were supplied with alternating current, all four diodes of the full-wave rectifier are loaded equally. In case of direct current supply and according to the example, two of the four diodes are idle and the other two carry the whole load.

In the following, an example for the direct current converter circuit 104 is described. In particular, as a preferred solution, a direct current to direct current conversion front end to the power supply unit 101 of the telecommunication equipment 10 is described. The front end comprises a printed circuit board having the direct current converter circuit 104. Preferably, the front end comprises the electrical interface as well, e.g. connection wires and connectors. The supplied telecommunication equipment 10 in this case is separate equipment, e.g. a metro cell.

The direct current converter circuit 104 comprises a second step-up converter circuit 126. The second step-up converter circuit 126 comprises two inputs that connect to respective inputs of a protective circuit 128. The protective circuit 128 includes for example an inrush limiter. The inrush current limiter may be a resistor or a thermistor connected in series to one of the inputs of the step-up converter circuit 126. Two resistors or thermistors each connecting to one of the two inputs of the step-up converter circuit 126 may be used as well. The exemplary protective circuit 128 comprises a first transistor 140 and a second transistor 142. In particular, the protective circuit comprises as the first transistor 140 an enhancement-mode type metal-oxide-semiconductor field effect transistor and as the second transistor 142 another enhancement-mode type metal-oxide-semiconductor field effect transistor. The source of the first transistor 140 is in this case connected to a terminal of the protective circuit having negative polarity in operation of the direct current converter circuit 104. In the example this terminal is a direct current input terminal at the first input 1 accepting negative polarity in operation of the device 100. The drain for the first transistor 140 is in this case connected to a source of the second transistor 142. The drain of the second transistor 142 is in this case connected to one output of the protective circuit 128. In the example, this output connects directly to an output terminal of the first output 2. In this example the other input of the protective circuit 128 is connected directly to another output of the protective circuit 128. In the example this other input of the protective circuit 128 connects directly to another input terminal of the first terminal 1. Consequently, the protective circuit 128 comprises two inputs and two outputs. The protective circuit 128 connects to two respective inputs of the second step-up converter circuit 126.
The protective circuit 128 is adapted to detect, e.g. at respective gates of the first transistor 140 or the second transistor 142, an interruption or an increase in the current draw at either of the input terminals of the second step-up converter circuit 126. This relates to an reduced or increased power consumption by the step-up converter circuit 126. The protective circuit 128 is adapted to influence the direct current input to the step-up converter circuit 126 by triggering the first transistor or second transistor 142. The direct current input to the step-up converter circuit 126 is reduced, e.g. by operation of the first transistor 140 or the second transistor 142, temporarily to a reduced direct current input upon detection of an interruption in current draw by the step-up converter circuit 126 or upon detection of an increase in power consumption by the step-up converter circuit 126. This way the power supplied to the equipment is interruptible briefly if an arch is detected upon connecting the device to the equipment. Hence, the risk of potential damage to either device or equipment is mitigated.

The second step-up converter circuit 126 has two output lines connected to two respective inputs of an optional second electromagnetic interference filter 130. This filter is shown schematically in Fig. 2.

The second step-up converter circuit 126 comprises a second storage element 132, e.g. another capacitor or inductor or the two in combination. In the example the storage element 132 is an inductor. The storage element 132 connects on one side to the input of the second step-up converter circuit 126 that connects via the protective circuit 128 to the terminal of the first input 1 directly. The output of the second storage element 132 connects to an input of a second diode 134. The second diode 134 in the example is forward biased in the sense that the second diode 134 permits current flow from the input to the output if positive Voltage is supplied to the input of the second diode 134. The output of the second diode 134 connects to an output of the second step-up converter circuit 126. A second switch 136 is connected to the input of the second diode 134 and to another of the two outputs of the protective circuit 128. The second switch 136 may be a depletion mode type metal-oxide-semiconductor field-effect transistor, an insulated-gate bipolar transistor, or a bipolar junction transistor. A second capacitor 138 is in the example connected on one side of the second capacitor 138 to the output of the second diode 134. The other side of the second capacitor 138 connects to the same output of protective circuit 128 as the second switch 136. The second capacitor 138, the other output of the protective circuit 128 and hence the corresponding side of second switch 136 are connected to another output of the second step-up converter circuit 126.

The output of the second step-up converter circuit 126 is the constant DC voltage at the second voltage level V2 which is in the example above the direct current input voltage supplied to the second step-up converter circuit 126. In the example, the second step-up converter circuit 126 is adapted to provide a constant DC voltage at the second voltage level of 110 Volts. In the example it is assumed that the output voltage of the second step-up converter circuit 126 is delivered with +62 Volts on one output of the second step-up converter circuit 126 and -48 Volts at the other output of the second step-up converter circuit 126.

The two outputs of the second step-up converter circuit 126, connect to the first input 110 and the second input 112 of the power supply circuit 102 respectively. This connection may be e.g. to the input rectifier and the fuse 114 directly, or via the second electromagnetic interference filter 130. In particular, the output of diode 134 connects to the first input 110. In the example the drain of the second transistor 142 connects to the second input 112.

Preferably a connection at the first input 110 and the second input 112 is releasable. In particular, a female connector comprising as receptacles the first input 110 and the second input 112 may mate with a corresponding male connector that comprises the two outputs of the step-up converter circuit 126, or vice versa. Patch cable may be used as well for connecting the step-up converter circuit 126 to the first input 110 and second input 112.

Preferably the direct current converter circuit 104 is designed with components providing an efficiency of approximately 95% regarding the power loss during power conversion.

The direct current converter circuit 104 may comprise a surge limiter, under- and/or over-voltage lockout and/or reverse polarity protection. In addition, the protection may also be adapted as protection in case of negative output to ground short circuit.

Positive output to ground short circuit protection may be conveyed by the overpower limiter of the step-up converter. Positive to negative output short circuit protection may be conveyed by both protection mechanisms together.

For a metro cell with approximately 100 Watts power consumption, the printed circuit board of the direct current to direct current converter circuit 104 is just 90 millimeters x 50 millimeters.

The direct current to direct current converter circuit 104 are preferably placed in a cage, e.g. a perforated cage, for ingress protection. Preferably the direct current converter circuit 104 is housed in a box with dimensions of e.g. 100 millimeters x 60 millimeters x 32 millimeters. The box may be a metal box.

For 100 Watts power output and assuming 95% efficiency, the power dissipation is just 5 Watts. Preferably, the box, in particular the metal box, is installed on site relative to the telecommunication equipment 101, in a path of an air flow resulting from heat generated in operation by telecommunication equipment 101. Additionally, or alternatively, the air flow may result from operation of a fan installed in telecommunication equipment 101. This way, the metal box acts as heat sink. This way operation at 70° centigrade can easily be supported.

The aforementioned direct current to direct current converter circuit 104 uses only a few and inexpensive components. A cooling fin or several cooling fins or cooling web may be provided at or near the housing or the box. This way the aforementioned circuitry may comprise components suitable to be used for higher power levels, e.g. 300 Watts to 500 Watts as well. Power dissipation then may increase e.g. to 15 Watts or 25 Watts. Additionally, or alternatively, the housing or box may comprise a suitable sized dissipation area, or the air flow resulting from the fan may be increased.

The direct current to direct current converter circuit 104 in the example is a non-isolated type direct current to direct current converter circuit. As the power supply circuit 102 already provides isolation, an additional isolation is not required. Additionally, non-isolated direct current to direct current converters have a better efficiency than isolated converters. Using a non-isolated converter has also the advantage that the voltage from any terminal to ground stays at a low level. As can be seen in Fig. 2, the negative terminal delivers in the example -48 Volts and the positive terminal delivers +62 Volts. This means that in total 110 Volts are delivered between the positive and the negative terminal. An additional isolation may be provided however as well.

In another example, in particular, when batteries are used for power supply and these batteries are fully charged, the negative terminal may deliver -53 Volts. In this case the positive terminal delivers +57 Volts. This means that in total 110 Volts are delivered between the positive and the negative terminal.

As a further improvement, when there is an issue with arcing while disconnecting the link between the direct current to direct current converter circuit 104 and the input of the power supply circuitry, e.g. of the metro cell or other telecommunication equipment 10, the direct current to direct current converter circuit 104 may be adapted to operate slightly pulsed. This means that the power output is shortly interrupted upon detection of an arc, to allow extinguishing of the arc. To that end a detection circuit and a control circuit may be included in the direct current converter circuit 104. The detection circuit is adapted for detecting a current draw exceeding a predetermined threshold for a predetermined amount of time. The control circuit is adapted for disconnecting at least once one or both outputs of the direct current converter circuit 104 from one or both inputs of the direct current converter circuit 104 for another predetermined amount of time, upon detection of the current draw exceeding the threshold for the predetermined amount of time.

Preferably this is only done if an arc is detected, e.g. by a very short interruption in current draw or sudden increase in power consumption, to avoid reaching the TNV-2 limit because of the alternating current component in the supply voltage.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks, may be provided through the use of dedicated hardware as well as hardware capable of executing software in association with appropriate software.

It should be appreciated by those skilled in the art that any block diagrams herein represent conceptual views of illustrative circuitry embodying the principles of the invention.

## Claims

1. A device (100) adapted for supplying power to a power supply unit (101) of a telecommunication equipment (10), the device comprising:
- a first input (1) for receiving a direct current having a first voltage level (V1);
- a direct current converter circuit (104) for converting the direct current having the first voltage level (V1) to direct current having a second voltage level (V2); and
- a first output for supplying the direct current having the second voltage level (V2) to the power supply unit (101) of the telecommunication equipment (10) ;
wherein the direct current to direct current converter circuit (104) is a non-isolated type direct current to direct current converter circuit.

2. The device (100) according to claim 1, wherein the direct current to direct current converter circuit (104) is adapted to supply a constant direct current having the second voltage level (V2) in a range of 95 Volts to 125 Volts, preferably of 110 Volts or 120 Volts, or in a range of 215 Volts to 240 Volts, preferably of 230 Volts or 240 Volts.

3. The device (100) according to any of the preceding claims, wherein the direct current to direct current converter circuit (104) comprises a step-up converter circuit (126) for output of the direct current output and a protective circuit (128) adapted to detect interruption in the current draw by the step-up converter circuit (126) and/or increase in power consumption by the step-up converter circuit (126), and wherein the protective circuit (128) is adapted to influence the direct current input to the step-up converter circuit (126), wherein the direct current input to the step-up converter circuit (126) is reduced temporarily to a reduced direct current input upon detection of an interruption in current draw by the step-up converter circuit (126) or upon detection of an increase in power consumption by the step-up converter circuit (126).

4. The device (100) according to any of the preceding claims, wherein the first input (1) comprises a first input terminal and a second input terminal, wherein the first input terminal is adapted to receive a positive voltage level of preferably Zero Volts as a first component of the first voltage level, and wherein the second input terminal is adapted to receive a negative voltage level of preferably -48 Volts as a second component of the first voltage level, wherein the first voltage level of the direct current corresponds to the difference between the positive voltage level and the negative voltage level.

5. The device (100) according to any of the preceding claims, wherein the first output (2) comprises a first output terminal and a second output terminal, and wherein the first output terminal is adapted to supply a positive voltage level between +135 Volts and +105 Volts, or between +65 Volts and +50 Volts, in particular +62 Volts or +57 Volts, as a first component of the second voltage level and wherein the second output terminal is adapted to supply a negative voltage level between -95 Volts and -125 Volts, or between -45 Volts and -60 Volts, in particular -48 Volts or -53 Volts, as a second component of the second voltage level, wherein the second voltage level of the direct current corresponds to the difference between the positive voltage level and the negative voltage level.

6. The device (100) according to any of the preceding claims, wherein the direct current to direct current converter circuit (104) comprises an inrush current limiter adapted to limit the input direct current to the step-up converter circuit (126).

7. A telecommunication equipment (10) comprising the device (100) according to any of the preceding claims and a power supply unit (101), wherein the power supply unit (101) comprises a second input (3) for connection to the first output (2) of the device (100).

8. The equipment (10) according to claim 7, wherein the device (100) is detachably connectable to the power supply unit (101) of the telecommunication equipment (10).

9. The equipment according to claim 7 or 8, wherein the second input (3) of the power supply unit (101) is an input for alternating current.

10. The equipment (10) according to claim 9, wherein the power supply unit (101) comprises a power supply circuit (102) for converting input voltage with alternating current to output voltage with direct current, wherein the power supply circuit (102) is connected to the second input (3), wherein the power supply circuit (102) is adapted to convert the direct current having the second voltage level (V2) to direct current having a third voltage level (V3), and wherein the power supply circuit (102) is adapted to supply the direct current having the third voltage level (V3) to a second output (4).

11. The equipment (10) according to any of claims 7 to 10, wherein the power supply unit (101) comprises a step-up converter circuit (106) adapted to output a voltage following the second voltage level at the first output of the device (100).

12. A method of supplying power to a power supply unit (101) of a telecommunication equipment (10) the method comprising:
supplying a direct current converter circuit (104) with direct current having a first voltage level (V1),
converting, by the current converter circuit (104), the direct current having the first voltage level (V1) to direct current having a second voltage level (V2),
supplying the direct current having the second voltage level (V2) to the power supply unit (101) of the equipment (10),
wherein the direct current converter circuit (104) is a non-isolated type direct current to direct current converter circuit.

13. The method according to claim 12, wherein the second voltage level (V2) is a constant voltage level in a range of 95 Volts to 125 Volts, in particular of 95 Volts or 120 Volts, or in a range of 215 Volts to 240 Volts, in particular 230 Volts or 240 Volts.

14. The method according to claim 12, wherein the direct current having the second voltage level (V2) is supplied via a first output terminal and a second output terminal, wherein the first output terminal supplies a positive voltage level between +135 Volts and +105 Volts, or between +65 Volts and +50 Volts, in particular +62 Volts or +57 Volts, as a first component of the second voltage level and wherein the second output terminal supplies a negative voltage level between -95 Volts and -125 Volts, or between -45 Volts and -60 Volts, in particular -48 Volts or -53 Volts, as a second component of the second voltage level, wherein the second voltage level of the direct current corresponds to the difference between the positive voltage level and the negative voltage level.

## Amended claims

### Amended claims in accordance with Rule 137(2) EPC.

1. A device (100) adapted for supplying power to a power supply unit (101) of a telecommunication equipment (10), the device comprising:
- a first input (1) for receiving a direct current having a first voltage level (V1);
- a direct current converter circuit (104) for converting the direct current having the first voltage level (V1) to direct current having a second voltage level (V2);
- a first output for supplying the direct current having the second voltage level (V2) to the power supply unit (101) of the telecommunication equipment (10) ;
wherein the direct current to direct current converter circuit (104) is a non-isolated type direct current to direct current converter circuit, **characterized in that** the direct current to direct current converter circuit (104) comprises a step-up converter circuit (126) for output of the direct current output and a protective circuit (128) adapted to detect interruption in the current draw by the step-up converter circuit (126) and/or increase in power consumption by the step-up converter circuit (126), and wherein the protective circuit (128) is adapted to influence the direct current input to the step-up converter circuit (126), wherein the direct current input to the step-up converter circuit (126) is reduced temporarily to a reduced direct current input upon detection of an interruption in current draw by the step-up converter circuit (126) or upon detection of an increase in power consumption by the step-up converter circuit (126).

2. The device (100) according to claim 1, wherein the direct current to direct current converter circuit (104) is adapted to supply a constant direct current having the second voltage level (V2) in a range of 95 Volts to 125 Volts, preferably of 110 Volts or 120 Volts, or in a range of 215 Volts to 240 Volts, preferably of 230 Volts or 240 Volts.

3. The device (100) according to any of the preceding claims, wherein the first input (1) comprises a first input terminal and a second input terminal, wherein the first input terminal is adapted to receive a positive voltage level of preferably Zero Volts as a first component of the first voltage level, and wherein the second input terminal is adapted to receive a negative voltage level of preferably -48 Volts as a second component of the first voltage level, wherein the first voltage level of the direct current corresponds to the difference between the positive voltage level and the negative voltage level.

4. The device (100) according to any of the preceding claims, wherein the first output (2) comprises a first output terminal and a second output terminal, and wherein the first output terminal is adapted to supply a positive voltage level between +135 Volts and +105 Volts, or between +65 Volts and +50 Volts, in particular +62 Volts or +57 Volts, as a first component of the second voltage level and wherein the second output terminal is adapted to supply a negative voltage level between -95 Volts and -125 Volts, or between -45 Volts and -60 Volts, in particular -48 Volts or -53 Volts, as a second component of the second voltage level, wherein the second voltage level of the direct current corresponds to the difference between the positive voltage level and the negative voltage level.

5. The device (100) according to any of the preceding claims, wherein the direct current to direct current converter circuit (104) comprises an inrush current limiter adapted to limit the input direct current to the step-up converter circuit (126).

6. A telecommunication equipment (10) comprising the device (100) according to any of the preceding claims and a power supply unit (101), wherein the power supply unit (101) comprises a second input (3) for connection to the first output (2) of the device (100) .

7. The equipment (10) according to claim 6, wherein the device (100) is detachably connectable to the power supply unit (101) of the telecommunication equipment (10) .

8. The equipment according to claim 6 or 7, wherein the second input (3) of the power supply unit (101) is an input for alternating current.

9. The equipment (10) according to claim 8, wherein the power supply unit (101) comprises a power supply circuit (102) for converting input voltage with alternating current to output voltage with direct current, wherein the power supply circuit (102) is connected to the second input (3), wherein the power supply circuit (102) is adapted to convert the direct current having the second voltage level (V2) to direct current having a third voltage level (V3), and wherein the power supply circuit (102) is adapted to supply the direct current having the third voltage level (V3) to a second output (4).

10. The equipment (10) according to any of claims 6 to 10, wherein the power supply unit (101) comprises a step-up converter circuit (106) adapted to output a voltage following the second voltage level at the first output
of the device (100).

11. A method of supplying power to a power supply unit (101) of a telecommunication equipment (10) the method comprising:
supplying a direct current converter circuit (104) with direct current having a first voltage level (V1),
converting, by the current converter circuit (104), the direct current having the first voltage level (V1) to direct current having a second voltage level (V2),
supplying the direct current having the second voltage level (V2) to the power supply unit (101) of the equipment (10),
wherein the direct current converter circuit (104) is a non-isolated type direct current to direct current converter circuit, wherein the direct current to direct current converter circuit (104) comprises a step-up converter circuit (126) for output of the direct current output, **characterized by** detecting an interruption in a current draw by the step-up converter circuit (126) and/or increase in power consumption by the step-up converter circuit (126), and influencing the direct current input to the step-up converter circuit (126), wherein the direct current input to the step-up converter circuit (126) is reduced temporarily to a reduced direct current input upon detection of an interruption in current draw by the step-up converter circuit (126) or upon detection of an increase in power consumption by the step-up converter circuit (126).

12. The method according to claim 11, wherein the second voltage level (V2) is a constant voltage level in a range of 95 Volts to 125 Volts, in particular of 95 Volts or 120 Volts, or in a range of 215 Volts to 240 Volts, in particular 230 Volts or 240 Volts.

13. The method according to claim 11, wherein the direct current having the second voltage level (V2) is supplied via a first output terminal and a second output terminal, wherein the first output terminal supplies a positive voltage level between +135 Volts and +105 Volts, or between +65 Volts and +50 Volts, in particular +62 Volts or +57 Volts, as a first component of the second voltage level and wherein the second output terminal supplies a negative voltage level between -95 Volts and -125 Volts, or between -45 Volts and -60 Volts, in particular -48 Volts or -53 Volts, as a second component of the second voltage level, wherein the second voltage level of the direct current corresponds to the difference between the positive voltage level and the negative voltage level.
